# EUROPEAN PATENT SPECIFICATION

(11) **EP 2 886 741 B1**
(45) Date of publication and mention of the grant of the patent: **23.10.2019**
(21) Application number: 13198252.2
(22) Date of filing: 19.12.2013
(51) Int. Cl.: E04F 19/02, E02B 3/26

(54) **Fender, its use, method for its manufacture and method for protecting a surface**
Rammschutz, seine Verwendung, sein Herstellungsverfahren und Verfahren zum Schutz einer Oberfläche
Dispositif de protection, son utilisation, sa méthode de fabrication et méthode pour protéger une surface

(43) Date of publication of application: 24.06.2015
(73) Proprietor: Trelleborg Sealing Profiles Sweden AB, 331 29 Värnamo (SE)
(72) Inventor: ARNQVIST, Per, 352 43 VÄXJÖ (SE); BJÖRKQVIST, Markku, 331 42 VÄRNAMO (SE)
(74) Representative: AWA Sweden AB

(56) References cited:
- EP-A2- 0 161 004
- GB-A- 2 032 050
- GB-A- 2 088 524
- GB-A- 2 245 225
- JP-A- H0 782 723
- KR-A- 20080 095 371
- US-A- 3 335 689
- US-A1- 2002 079 632

## Description

### Field of the invention

The present invention relates to a strip-shaped fender for mounting on a surface to be protected from shocks from an impact direction. The invention also relates to the use of such a fender; to a method of manufacturing such a fender; and to a method of protecting a surface from shocks from a blunt object approaching the surface from an impact direction

### Background of the invention

US 3,861,110 discloses a bumper guard for mounting on a wall to be protected from shocks from an impact direction. The bumper guard is provided with an elongated, resilient bumper member for engaging with, and slowing down, an impacting object. JPH0782723 discloses also a further example of a fender and shows all the features of the preamble of claim 1.

There is a need for an improved fender, which better protects the surface to be protected, and which has a longer service life.

### Summary of the invention

It is an object of the present invention to solve, or at least mitigate, parts or all of the above mentioned problems. To this end, there is provided a strip-shaped fender for mounting on a surface to be protected from shocks from an impact direction, the fender comprising a resilient bladder extending along the length of the fender; a strip-shaped low-friction slide surface extending along the resilient bladder, the slide surface forming the outermost extremity of the fender in the impact direction, so as to be the first fender portion to engage with any blunt object impacting the fender from the impact direction; and a strip-shaped higher-friction impact-absorption surface extending along the length of the fender, said higher-friction impact-absorption surface being retractedly arranged behind the outermost extremity of the low-friction slide surface so as not to be the first fender portion to engage with any blunt object impacting the fender from the impact direction, the bladder being configured to, when an impact force of a blunt object striking the bladder from the impact direction exceeds a limit force, resiliently yield, such that the blunt object engages the higher-friction impact-absorption surface of the fender. Thanks to the low-friction slide strip, the fender will not notably impair or deflect the motion of any object, such as a shopping cart or a hospital bed, touching the fender with a low impact force. Moreover, thanks to the low-friction slide surface, the fender will be exposed to relatively moderate longitudinal stress, which will prolong the service life of the fender. When an object strikes the fender with an impact force exceeding the limit force, the higher-friction rubber strip of the fender will engage with, and assist in slowing down, the object. Throughout this disclosure, "blunt" is defined as being essentially flat along a direction perpendicular to the fender's longitudinal direction, on the scale of the fender's width. By way of example, a straight, sharp edge extending perpendicularly to the longitudinal direction of the fender is also considered as blunt within the meaning of this disclosure. Low and higher friction should be construed in relative terms, i.e. "higher friction" is simply higher than "low friction".

According to an embodiment, the strip-shaped fender further comprises a mounting foot for attaching the fender to a mating groove of the surface to be protected from shocks. Alternatively, the fender may be e.g. screwed, nailed, taped or glued to the surface to be protected.

According to an embodiment, said higher-friction impact-absorption surface is formed by a strip-shaped portion of the bladder adjoining the low-friction slide surface. Such a design is relatively simple, as well as highly resistant to wear and tear.

According to an embodiment, the low-friction slide surface covers less than about 40% of a total outer surface of the bladder. Such a limited width of the slide strip may be preferred in order to distribute the impact force over a relatively large surface of engagement between the higher-friction impact-absorption surface and the blunt object. The outer surface of the bladder is defined as the visible surface of the bladder when the fender is mounted to a surface to be protected.

According to the invention, said higher-friction impact-absorption surface is formed by the outer surface of a second resilient bladder extending along the length of the fender. Such a design is relatively simple, as well as highly resistant to wear and tear.

According to an embodiment, the strip-shaped fender further comprises a second strip-shaped higher-friction impact-absorption surface, wherein said higher-friction impact-absorption surfaces extend along either side of the low-friction slide surface.

According to an embodiment, the limit force corresponds to a line load, applied along a line perpendicular to the fender's longitudinal direction, exerting a force of at least 40 N/dm from an impact direction normal to the surface to be protected.

According to an embodiment, said low-friction slide surface is formed by a flocked fibre surface.

According to an embodiment, said low-friction slide surface is made by rubber or plastic. A rubber or plastic surface is relatively simple to manufacture since it may be extruded on top of the resilient bladder. Most rubber and plastic materials are also resistant to wear.

According to an embodiment, said higher-friction impact-absorption surface is formed by rubber. A rubber surface is relatively simple to manufacture since it may be extruded. According to an embodiment, the entire bladder may be made of rubber. The rubber may be of any type suitable for extrusion of strip-shaped fenders, such as natural or synthetic rubber.

According to another aspect of the invention, parts or all of the above mentioned problems are solved, or at least mitigated, by the use of a fender for protecting an essentially vertical surface from shocks from an impact direction, the fender comprising a low-friction slide surface forming the outermost extremity of the fender in the impact direction, so as to be the first fender portion to engage with any blunt object impacting the fender from the impact direction; and a higher-friction impact-absorption surface retractedly arranged behind the outermost extremity of the low-friction slide surface so as not to be the first fender portion to engage with any blunt object impacting the fender from the impact direction, the low-friction slide surface being configured to, when an impact force of a blunt object striking the fender from the impact direction exceeds a limit force, resiliently yield, such that the blunt object engages the higher-friction impact-absorption surface, the fender being, when in use, mounted onto the essentially vertical surface so as to protect against shocks from an object moving in the horizontal plane and striking the fender from an impact direction forming an oblique angle with the surface to be protected.

According to an embodiment, the fender may be used for protecting the wall of an industrial building or laboratory against impacting machines or vehicles; protecting the wall of a parking garage against impacting cars; protecting the wall of a self-service store against impacting shopping carts; protecting the wall of a hospital against impacting hospital beds; protecting a loading platform against impacting trucks; or protecting a pier construction against impacting boats.

According to an embodiment, the fender is a strip-shaped fender as described hereinbefore, the fender's longitudinal direction extending mainly in the horizontal direction.

According to yet another aspect of the invention, parts or all of the above mentioned problems are solved, or at least mitigated, by a method of protecting a surface from shocks from a blunt object approaching the surface from an impact direction, the method comprising a strip-shaped low-friction slide surface of a fender engaging with the blunt object first; and thereafter, if the impact force of the blunt object exceeds a limit force, allowing the low-friction slide surface to resiliently yield, such that the blunt object engages with a higher-friction impact-absorption surface of the fender, which surface is retractedly arranged behind the outermost extremity of the low-friction slide surface, as seen from the impact direction, when the fender is unloaded.

According to still another aspect of the invention, parts or all of the above mentioned problems are solved, or at least mitigated, by a method of manufacturing a strip-shaped fender for mounting on a surface to be protected from shocks from an impact direction, the method comprising extruding a relatively higher-friction rubber to form a fender blank comprising a resilient bladder extending along the length of the fender blank; extruding a relatively lower-friction polymer to form a slide layer on the resilient bladder, the slide layer forming the outermost extremity of the fender in the impact direction, so as to be the first fender portion to engage with any blunt object impacting the fender from the impact direction; and leaving a strip-shaped surface of relatively higher-friction rubber, extending along the length of the fender, bare, said strip-shaped surface of relatively higher-friction rubber being retracted behind the outermost extremity of the low-friction slide layer so as not to be the first fender portion to engage with any blunt object impacting the fender from the impact direction.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1a is a schematic illustration of an object approaching a vertical wall provided with a protective fender, as seen from above;
Fig. 1b is a schematic illustration, corresponding to the view of Fig. 1a, of a collision between the object and the wall with the protective fender;
Fig. 2 is a diagrammatic view in perspective of a first embodiment of a strip-shaped fender for mounting on a surface to be protected from shocks from an impact direction;
Fig. 3a is a cross-section section of the fender of Fig. 2 in an unloaded state;
Fig. 3b is a cross-section of the fender of Fig. 2 in a compressed state when having been exposed to an impact exceeding a limit force;
Fig. 4 is a cross-section of a second embodiment of a strip-shaped fender for mounting on a surface to be protected from shocks from an impact direction;
Fig. 5 is a cross-section of a third embodiment of a strip-shaped fender for mounting on a surface to be protected from shocks from an impact direction;
Fig. 6 is a cross-section of a fourth embodiment of a strip-shaped fender for mounting on a surface to be protected from shocks from an impact direction;
Fig. 7a is a cross-section of a fifth embodiment of a strip-shaped fender for mounting on a surface to be protected from shocks from an impact direction, the fender being in an unloaded state; and
Fig. 7b is a cross-section of the fender of Fig. 7a in a compressed state when having been exposed to an impact exceeding a limit force.

### Detailed description of the exemplary embodiments

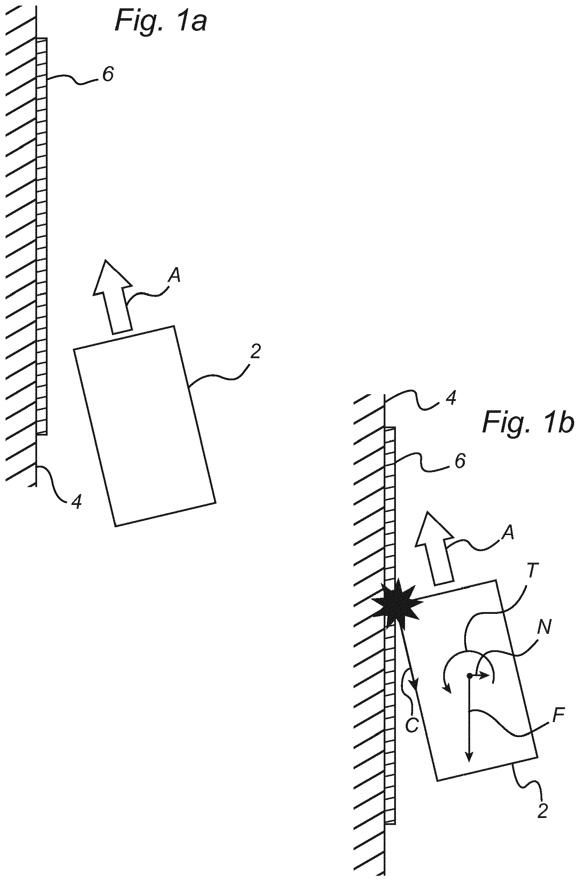

Fig. 1a-b illustrate the collision between a moving object 2, such as a shopping cart or a car, and a wall 4 provided with a strip-shaped rubber fender 6 extending horizontally along the wall 4. In the situation of Fig. 1a, the object 2 approaches the wall 4 from an impact direction, i.e., the impact direction is opposite to the object's motion illustrated by an arrow A. In the illustrated exemplary situation, the impact direction lies in the horizontal plane and forms an acute angle with the longitudinal direction of the fender 6.

Fig. 1b illustrates the moment of impact between the object 2 and the fender 6. The impact force C acting on the object 2 at the engagement between the object 2 and the fender 6 may be decomposed into a component N normal to the wall; a frictional component F parallel to the wall; and a torque T about a vertical axis, which will urge the object to turn anticlockwise as seen from above.

On collision, the torque T will strive to turn the object 2 anticlockwise, and thereby press the front end of the object 2 towards the wall 4. This effect will even further increase the impact force. In this manner, the fender 6 may in fact attract, rather than deflect, the object, causing the impact to be more severe, to the object 2 as well as to the wall 4, than it would have been without a fender. Moreover, a previously controlled, linear motion of the object maintained by e.g. a driver may due to the collision become out of control, e.g. causing uncontrolled rotation. By way of example, a person pushing a shopping cart 2, and accidentally running into the rubber fender 6 at an oblique angle, may lose control of the cart 2. On the other hand, a certain amount of friction between the object 2 and the fender 6 is desired; it may, for example, assist in stopping a shopping cart 2 that is already out of control, or that has accidentally been set in motion.

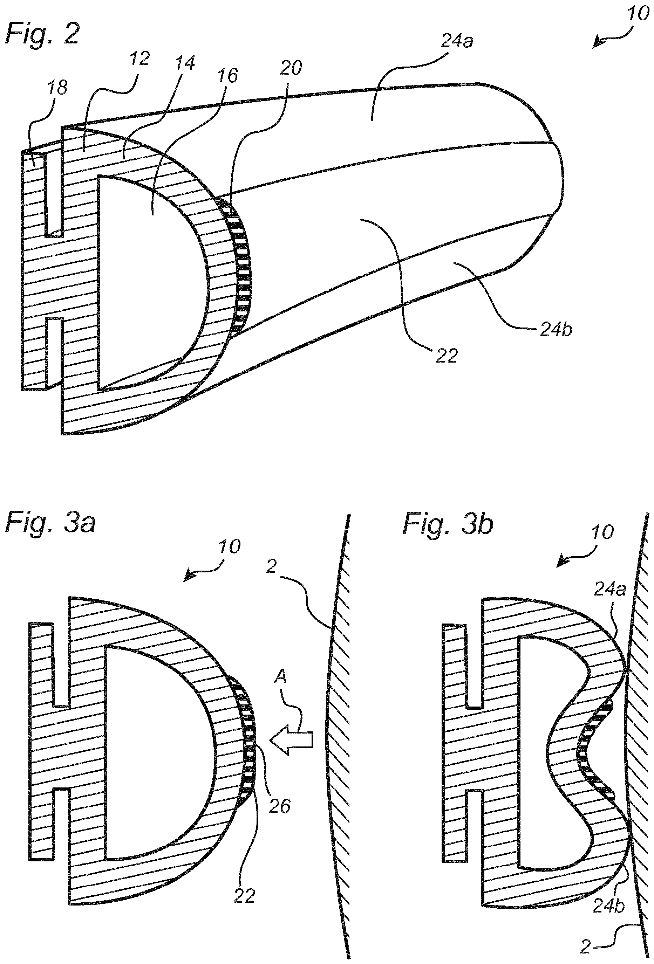

Fig. 2 illustrates a strip-shaped fender 10 for protecting a surface, such as the wall 4 of Figs 1a-b, from shocks from an impact direction having a component normal to the surface. The fender 10 is formed as a strip, the cross-section of which is essentially identical along the length of the fender 10. A solid rubber body 12 of the fender 10 comprises a resilient bladder 14, i.e. a tubular portion enclosing an air-filled space 16 extending along the length of the fender 10, and a mounting foot 18 for attaching the fender 10 to a mating, elongate groove (not shown). The bladder 14 is closed as seen in cross-section. An outer portion of the bladder 14 is provided with a low-friction slide strip 20, which has a low-friction slide surface 22 facing away from the mounting foot 18. The bladder's 14 outer surface is exposed along two strip-shaped bladder surface portions 24a, 24b, which extend on either side of the low-friction slide strip 20. The rubber of the body 12 has been selected to provide a normal to high level of friction, whereas the material of the slide strip 20 has been selected to provide a relatively low level of friction. Typically, the slide strip 20 may be formed by e.g. a thermoplastic, a low-friction rubber, or a flocked-fibre layer. As the body 12 is formed by a rubber selected to provide a higher level of friction than the low-friction slide strip, the exposed bladder surface portions 24a-b thereby form impact-absorption surfaces for frictionally engaging with, and thereby decelerating, an object impacting the fender 10. The fender's outer surface facing away from the mounting foot 18 is formed by the slide surface 22 and the two impact-absorption surfaces 24a-b. The low-friction slide surface 22 forms the outermost extremity of the fender 10 in a direction normal to the surface to be protected, and the two adjoining higher-friction impact-absorption surfaces 24a-b are retractedly arranged behind the outermost extremity of, the low-friction slide surface 22. The low-friction slide surface 22 covers about 30% of the total outer surface of the bladder, and the two impact-absorption surfaces 24a-b cover the remaining about 70%.

Figs 3a-b illustrate the collision between a blunt object 2 and the fender 10. In the situation of Fig. 3a, the object 2 approaches the wall 4 from an impact direction, its direction of motion being illustrated by an arrow A. The first fender portion to engage with the object 2 will be the outermost extremity 26 of the slide surface 22. On impact, the object 2 will gradually depress, and resiliently de-form, the fender 10 to an extent determined by the level of the impact force. If the impact force exceeds a limit force, the fender 10 will be sufficiently depressed to allow the object 2 to engage with the higher-friction impact-absorption surfaces 24a-b, thereby having arrived at the situation illustrated in Fig. 3b. Assuming that the object 2 strikes the fender 10 at an acute angle with the fender's longitudinal direction, the friction in the engagement between the object 2 and the higher-friction impact-absorption surfaces 24a-b will now decelerate the object's 10 motion along the fender 10.

The function of the fender 10 may be better understood by referring again to the situation of Fig. 1b, but assuming that the fender 6 has been replaced by the fender 10 described with reference to Figs 2-3. Upon impact, the low-friction slide surface 22 will be the first to engage with the object 2. When the surface-normal component of the impact force acting on the fender 10 (opposite, and identical in magnitude, to the normal force N acting on the object 2) exceeds the limit force, the impact force is sufficient to bring the object 2 into engagement with the higher-friction impact-absorption surfaces 24a-b, i.e. the fender 10 will have been locally depressed into the shape illustrated in Fig. 3b. When having reached this position, the higher-friction impact-absorption surfaces 24a-b will start to decelerate the object's 10 motion along the fender 10. However, before having reached this position, the normal force N exerted by the fender 10 on the object 2 will have already applied a significant clockwise torque on the object, thereby counteracting the anticlockwise torque induced by the friction along the fender's longitudinal direction. Stated more briefly, the fender 10 will engage with, and decelerate, the object 2 without so strongly urging the object 2 to turn towards the wall 4. Thereby, the effect that the impact might become more severe than it would have been without a fender may be avoided, and control of the object's 2 continued motion after the impact may easier be maintained.

The situation described above relates to an impact force exceeding the limit force. In the event that the impact force does not exceed the limit force, the object 2 will merely slide against the fender's 10 slide surface 22, and its motion will therefore not be significantly deflected or impaired. A typical limit force of a fender 10 may, by way of example, correspond to a line load, which is applied along a line perpendicular to the fender's 10 longitudinal direction and directed towards the fender 10 from an impact direction normal to the surface 4 to be protected, of between 40 N/dm and 4000 N/dm. A limit force in the lower part of the range may, e.g., be suited for absorbing the shock of a shopping cart impacting the wall of a self-service store, whereas a limit force in the upper part of the range may be suited for absorbing shocks of large vehicles or the like.

Thanks to the low-friction slide surface 22, the fender 10 will be exposed to relatively moderate longitudinal as well as transversal stress, which will prolong its service life.

The fender 10 may be manufactured by extruding the body 12 from a relatively higher-friction rubber material, and extruding the slide strip 20 as a layer of relatively lower-friction polymer, such as any suitable plastic or lower-friction rubber material, onto the body 12. The body 12 and slide strip 20 may also be co-extruded in a single extrusion step. The friction of rubber materials may be adjusted in many different ways. By way of example, it may be adjusted by using various rubber composition additives well known to those skilled in the art, such as polytetrafluoroethylene; by applying friction-increasing or friction-reducing substances, such as talcum powder, to the rubber surface; or by adjusting the hardness of the rubber.

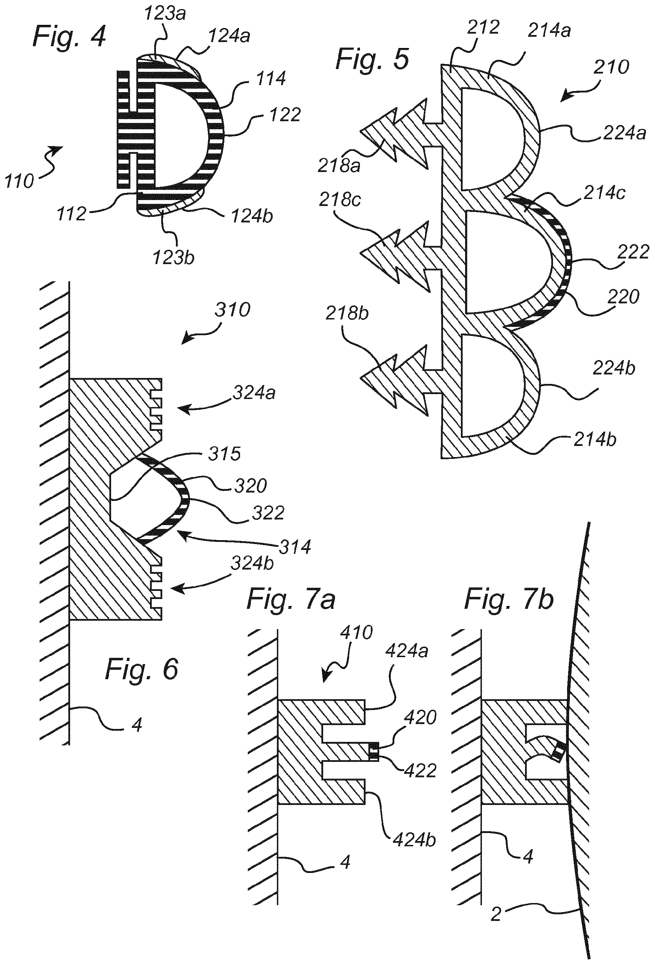

Fig. 4 illustrates a second embodiment of a fender. The fender 110 is functionally equivalent to the fender 10 described with reference to Figs 2-3. However, the fender 110 differs from the fender 10 in that the fender's 110 body 112 is made of a low-friction rubber, and the outermost extremity of the resilient bladder 114 is bare, defining a low-friction slide surface 122 extending along the length of the fender 110. Two relatively higher-friction rubber strips 123a, 123b, extending along the length of the fender 110, form impact-absorption surfaces 224a, 224b for engaging with, and decelerating, an impacting object once the impact force has exceeded a limit force.

Fig. 5 illustrates a third embodiment of a fender. The fender 210 comprises two bladders 214a-b located on either side of a central bladder 214c. The three bladders 214a-c form, together with three arrow-shaped feet 218a-c for attaching the fender 210 to mating grooves in a surface to be protected, an integral rubber body 212. A slide strip 220, having an outer low-friction slide surface 222, covers the outer surface of the central bladder 214c. The adjoining bladders 214a-b are bare, exposing the relatively higher-friction rubber material of the body 212 to form a pair of impact-absorbing surfaces 224a-b. The slide surface 222 of the central bladder 214c forms the outermost extremity of the fender in a direction normal to the surface to be protected, whereas the impact-absorption surfaces 224a-b of the adjoining bladders 214a-b are retractedly arranged behind the outermost extremity of the low-friction slide surface 222. Thereby, a blunt object striking the fender from an impact direction normal to the surface to be protected will first engage the low-friction slide surface 222 of the central bladder 214c, and thereafter, if the impact force exceeds a limit force, engage with the relatively higher-friction impact-absorption surfaces 224a-b.

Fig. 6 illustrates a fourth embodiment of a fender. The fender 310 comprises a solid, relatively high-friction rubber body 312 with a recess 315 extending along the length of the body 312. The recess 315 defines, together with a strip-shaped sheet 320 of relatively low-friction rubber bridging the recess 315 and extending along the length of the fender 310, a closed bladder 314. The sheet 320 of relatively low-friction rubber bulges out from the recess 315, to form a low-friction slide surface 322 at the outermost extremity of the fender 310 in a direction normal to the surface 4 to be protected. Relatively higher-friction impact-absorption surfaces 324a-b are retracted behind the outermost extremity of the slide surface 322, so as not to be the first surfaces to engage with any blunt object impacting the fender from an direction normal to the surface 4 to be protected. The fender 310 does not have a foot; instead, it may be e.g. screwed or glued onto the surface 4 to be protected.

Figs 7a-b illustrate the collision between an object and a fifth embodiment of a fender. The fender 410 differs from the fenders 10, 110, 210, 310 described hereinbefore in that the fender 410 does not comprise a bladder. However, the function of the fender 410 is similar to those previously described. A blunt object 2 approaching a surface 4 to be protected will first engage with a strip-shaped low-friction slide portion 420 of the fender, and thereafter, if the impact force of the object 2 exceeds a limit force, depress or deflect the low-friction slide portion 420 (Fig. 7b), such that the object engages with higher-friction impact-absorption portions 424a-b of the fender, which portions 424a-b are retractedly arranged behind the outermost extremity of the surface 422 of the low-friction slide portion 420 when the fender is unloaded (Fig. 7a).

The fenders 10, 110, 210, 320, 410 described hereinbefore are particularly well suited for protecting against impacts of blunt objects moving in a plane parallel to the normal of the surface to be protected, and having a velocity a substantial component of which is directed along the longitudinal direction of the fender. To concretize and exemplify, the fenders are well suited for extending horizontally on vertical walls, for protecting against objects moving in the horizontal plane. Particular applications may comprise, e.g., protecting the walls of industrial buildings, research laboratories, parking garages, self-service stores, hospitals and loading platforms against impacting objects rolling on wheels, and protecting pier constructions against boats approaching horizontally along a water surface.

The invention has mainly been described above with reference to a few embodiments. However, as is readily appreciated by a person skilled in the art, other embodiments than the ones disclosed above are equally possible within the scope of the invention, as defined by the appended patent claims.

For example, a fender as defined in the claims may be used for protecting many different types of surfaces against many different types of objects; its application areas are not limited to those specifically mentioned hereinbefore. Moreover, all of the embodiments illustrated hereinbefore have a centrally located low-friction slide surface which is straddled by a pair of higher-friction surfaces. Alternatively, it can also be the opposite; i.e., a pair of low-friction surfaces, at least one of which forms the outermost extremity of the fender in the impact direction, may straddle a centrally located higher-friction surface. In fact, the fender need not be symmetric in any respect. By way of example, the fender can comprise one single higher-friction surface extending along one side of, and being retractedly arranged behind, one single low-friction surface forming the outermost extremity in the impact direction. The entire bladder need not be made of a resilient material in order to form a resilient bladder. By way of example, a resilient bladder may comprise a rigid base of e.g. metal. Strip-shaped fenders of uniform profile/cross-section along the length of the fender have been illustrated hereinbefore. It is not, however, necessary that the fender be strip-shaped with a uniform profile along its length.

## Claims

1. A strip-shaped fender for mounting on a surface to be protected from shocks from an impact direction, the fender (10; 110; 210; 310) comprising
a first resilient bladder (14; 114; 214c; 314) extending along the length of the fender (10; 110; 210; 310);
a strip-shaped low-friction slide surface (22; 122; 222; 322) extending along the first resilient bladder (14; 114; 214c; 314), the slide surface (22; 122; 222; 322) forming the outermost extremity (26) of the fender (10; 110; 210; 310) in the impact direction, so as to be the first fender (10; 110; 210; 310) portion to engage with any blunt object (2) impacting the fender (10; 110; 210; 310) from the impact direction; and
a strip-shaped higher-friction impact-absorption surface (24a-b; 124a-b; 224a-b; 324a-b) extending along the length of the fender (10; 110; 210; 310), said higher-friction impact-absorption surface (24a-b; 124a-b; 224a-b; 324a-b) being retractedly arranged behind the outermost extremity (26) of the low-friction slide surface (22; 122; 222; 322) so as not to be the first fender portion to engage with any blunt object (2) impacting the fender (10; 110; 210; 310) from the impact direction,
**characterized in that** said
first resilient bladder (14; 114; 214c; 314) is
configured to,
when an impact force of a blunt object (2) striking the first resilient bladder (14; 114; 214c; 314) from the impact direction exceeds a limit force, resiliently yield, such that the blunt object (2) engages the higher-friction impact-absorption surface (24a-b; 124a-b; 224a-b; 324a-b) of the fender (10; 110; 210; 310), wherein
said higher-friction impact absorption surface is formed by the outer surface (224a-b) of a second resilient bladder (214a-b) extending along the length of the fender (210).

2. The strip-shaped fender according to claim 1, further comprising a mounting foot (18; 218a-c) for attaching the fender (10; 210) to a mating groove of the surface (4) to be protected from shocks.

3. The strip-shaped fender according to any of the previous claims, wherein said higher-friction impact-absorption surface is formed by a strip-shaped portion (24a-b; 124a-b) of the bladder (14; 114) adjoining the low-friction slide surface (22; 122).

4. The strip-shaped fender according to claim 3, wherein the low-friction slide surface (22) covers less than about 40% of a total outer surface of the bladder (14).

5. The strip-shaped fender according to any of the previous claims, further comprising a second strip-shaped higher-friction impact-absorption surface (24a-b; 124a-b; 224a-b; 324a-b), wherein said higher-friction impact-absorption surfaces (24a-b; 124a-b; 224a-b; 324a-b) extend along either side of the low-friction slide surface (22; 122; 222; 322).

6. The strip-shaped fender according to any of the previous claims, wherein the limit force corresponds to a line load, applied along a line perpendicular to the fender's longitudinal direction, exerting a force of 40 N/dm from an impact direction normal to the surface (4) to be protected.

7. The strip-shaped fender according to any of the previous claims, wherein said low-friction slide surface (22; 122; 222; 322) is formed by a flocked fibre surface.

8. The strip-shaped fender according to any of the previous claims, wherein said low-friction slide surface (22; 122; 222; 322) is made by rubber or plastic.

9. The strip-shaped fender according to any of the previous claims, wherein said higher-friction impact-absorption surface (24a-b; 124a-b; 224a-b; 324a-b) is formed by rubber.

10. Use of a fender for protecting an essentially vertical surface (4) from shocks from an impact direction, the fender (10; 110; 210; 310; 410) comprising
a first resilient bladder (14; 114; 214c; 314);
a low-friction slide surface (22; 122; 222; 322; 422) extending along the first resilient bladder (14; 114; 214c; 314), the slide surface (22; 122; 222; 322) forming the outermost extremity (26) of the fender (10; 110; 210; 310; 410) in the impact direction, so as to be the first fender portion to engage with any blunt object (2) impacting the fender (10; 110; 210; 310; 410) from the impact direction; and
a higher-friction impact-absorption surface (24a-b; 124a-b; 224a-b; 324a-b; 424a-b) retractedly arranged behind the outermost extremity (26) of the low-friction slide surface (22; 122; 222; 322; 422) so as not to be the first fender portion to engage with any blunt object (2) impacting the fender (10; 110; 210; 310; 410) from the impact direction,
the low-friction slide surface (22; 122; 222; 322; 422) being configured to, when an impact force of a blunt object (2) striking the fender (10; 110; 210; 310; 410) from the impact direction exceeds a limit force, resiliently yield, such that the blunt object (2) engages the higher-friction impact-absorption surface (24a-b; 124a-b; 224a-b; 324a-b; 424a-b), the fender (10; 110; 210; 310; 410) being, when in use, mounted onto the essentially vertical surface (4) so as to protect against shocks from an object (2) moving in the horizontal plane and striking the fender (10; 110; 210; 310) from an impact direction forming an oblique angle with the essentially vertical surface to be protected,
**characterized in that** said higher-friction impact absorption surface is formed by the outer surface (224a-b) of a second resilient bladder (214a-b) extending along the length of the fender (210).

11. Use of a fender according to claim 10 for protecting the wall of an industrial building or laboratory against impacting machines or vehicles; protecting the wall of a parking garage against impacting cars; protecting the wall of a self-service store against impacting shopping carts; protecting the wall of a hospital against impacting hospital beds; protecting a loading platform against impacting trucks; or protecting a pier construction against impacting boats.

12. Use of a fender according to any of the claims 10-11, wherein the fender (10; 110; 210; 310) is a strip-shaped fender according to any of the claims 1-10, the fender's (10; 110; 210; 310) longitudinal direction extending mainly in the horizontal direction.

13. A method of protecting a surface (4) from shocks from a blunt object (2) approaching the surface (4) from an impact direction, the method
comprising
a strip-shaped low-friction slide surface (22; 122; 222; 322; 422) of a fender (10; 110; 210; 310; 410) engaging with the blunt object (2) first, said strip-shaped low-friction slide surface extending along a first resilient bladder (14; 114; 214c; 314); and
thereafter, if the impact force of the blunt object (2) exceeds a limit force, allowing the low-friction slide surface (22; 122; 222; 322; 422) to resiliently yield, such that the blunt object (2) engages with a higher-friction impact-absorption surface (24a-b; 124a-b; 224a-b; 324a-b; 424a-b) of the fender (10; 110; 210; 310; 410), which surface (24a-b; 124a-b; 224a-b; 324a-b; 424a-b) is retractedly arranged behind the outermost extremity (26) of the low-friction slide surface (22; 122; 222; 322; 422), as seen from the impact direction, when the fender (10; 110; 210; 310; 410) is unloaded,
**characterized in that** said higher-friction impact absorption surface is formed by the outer surface (224a-b) of a second resilient bladder (214a-b) extending along the length of the fender (210).

14. A method of manufacturing a strip-shaped fender for mounting on a surface to be protected from shocks from an impact direction, the method being **characterized in** comprising
extruding a relatively higher-friction rubber to form a fender blank (12; 212) comprising a resilient bladder (14; 214a-c) extending along the length of the fender blank (12; 212);
extruding a relatively lower-friction polymer to form a slide layer (20; 220) on the resilient bladder, the slide layer (20; 220) forming the outermost extremity (26) of the fender (10; 210) in the impact direction, so as to be the first fender portion to engage with any blunt object (2) impacting the fender (10; 210) from the impact direction; and
leaving a strip-shaped surface (24a-b; 224a-b) of relatively higher-friction rubber, extending along the length of the fender (10; 110; 210; 310), bare, said strip-shaped surface (24a-b; 224a-b) of relatively higher-friction rubber being retracted behind the outermost extremity (26) of the low-friction slide layer (20; 120; 220; 320) so as not to be the first fender portion to engage with any blunt object (2) impacting the fender (10; 110; 210; 310) from the impact direction.

## Patentansprüche

1. Streifenförmiger Rammschutz zur Befestigung auf einer Oberfläche, die vor Stößen aus einer Aufprallrichtung geschützt werden soll, der Rammschutz (10; 110; 210; 310) umfassend
eine erste elastische Blase (14; 114; 214c; 314), die sich entlang der Länge des Rammschutzes (10; 110; 210; 310) erstreckt;
eine streifenförmige reibungsarme Gleitfläche (22; 122; 222; 322), die sich entlang der ersten elastischen Blase erstreckt (14; 114; 214c; 314), wobei die Gleitfläche (22; 122; 222; 322) die äußerste Extremität (26) des Rammschutzes (10; 110; 210; 310) in der Aufprallrichtung bildet, um der erste Rammschutzabschnitt (10; 110; 210; 310) zu sein, der mit einem stumpfen Objekt (2), das aus der Aufprallrichtung auf den Rammschutz (10; 110; 210; 310) aufprallt, in Eingriff kommt; und
eine streifenförmige Aufprallabsorptionsfläche mit höherer Reibung (24a-b; 124a- b; 224a-b; 324a-b), die sich entlang der Länge des Rammschutzes (10; 110; 210; 310) erstreckt, wobei die Aufprallabsorptionsfläche mit höherer Reibung (24a-b; 124a-b; 224a-b; 324a-b) hinter der äußersten Extremität (26) der reibungsarmen Gleitfläche angeordnet ist (22; 122; 222; 322), um nicht der erste Rammschutzabschnitt zu sein, der mit einem stumpfen Objekt (2), das aus der Aufprallrichtung auf den Rammschutz (10; 110; 210; 310) aufprallt, in Eingriff kommt,
**dadurch gekennzeichnet, dass**, wenn eine Aufprallkraft eines stumpfen Objekts (2), das auf die erste elastische Blase (14; 114; 214c; 314) aus der Aufprallrichtung auftrifft, eine Grenzkraft überschreitet, die erste elastische Blase (14; 114; 214c; 314) derart konfiguriert ist, elastisch nachzugeben, so dass das stumpfe Objekt (2) mit der Aufprallabsorptionsfläche mit höherer Reibung (24a-b; 124a-b; 224a-b; 324a-b) des Rammschutzes (10; 110; 210; 310) in Eingriff kommt,
wobei die Aufprallabsorptionsfläche mit höherer Reibung durch die Außenfläche (224a-b) aus einer zweiten elastischen Blase (214a-b), die sich entlang der Länge des Rammschutzes (210) erstreckt, gebildet ist.

2. Streifenförmiger Rammschutz nach Anspruch 1, der ferner einen Montagefuß (18; 218a-c) zum Anbringen des Rammschutzes (10; 210) an einer passenden Nut der Oberfläche (4) umfasst, die vor Stößen geschützt werden soll.

3. Streifenförmiger Rammschutz nach einem der vorhergehenden Ansprüche, wobei die Aufprallabsorptionsfläche mit höherer Reibung durch einen streifenförmigen Abschnitt (24a-b; 124a-b) der Blase (14; 114) angrenzend an die reibungsarme Gleitfläche (22; 122) gebildet ist.

4. Streifenförmiger Rammschutz nach Anspruch 3, wobei die reibungsarme Gleitfläche (22) weniger als etwa 40 % der gesamten Außenfläche der Blase (14) bedeckt.

5. Streifenförmiger Rammschutz nach einem der vorhergehenden Ansprüche, ferner umfassend eine zweite streifenförmige Aufprallabsorptionsfläche mit höherer Reibung (24a-b; 124a-b; 224a-b; 324a-b), wobei die Aufprallabsorptionsfläche mit höherer Reibung (24a-b; 124a-b; 224a-b; 324a-b) sich entlang jeder Seite der reibungsarmen Gleitfläche (22; 122; 222; 322) erstreckt.

6. Streifenförmiger Rammschutz nach einem der vorhergehenden Ansprüche, wobei die Grenzkraft einer Linienlast entspricht, die entlang einer Linie senkrecht zur Längsrichtung des Rammschutzes aufgebracht ist und eine Kraft von 40 N/dm aus einer Aufprallrichtung senkrecht zu der zu schützenden Oberfläche (4) ausübt.

7. Streifenförmiger Rammschutz nach einem der vorhergehenden Ansprüche, wobei die reibungsarme Gleitfläche (22; 122; 222; 322) durch eine beflockte Faseroberfläche gebildet ist.

8. Streifenförmiger Rammschutz nach einem der vorhergehenden Ansprüche, wobei die reibungsarme Gleitfläche (22; 122; 222; 322) aus Gummi oder Kunststoff hergestellt ist.

9. Streifenförmiger Rammschutz nach einem der vorhergehenden Ansprüche, wobei die Aufprallabsorptionsfläche mit höherer Reibung (24a-b; 124a-b; 224a- b; 324a-b) aus Gummi gebildet ist.

10. Verwendung eines Rammschutzes zum Schutz einer im Wesentlichen vertikalen Oberfläche (4) vor Stößen aus einer Aufprallrichtung, der Rammschutz (10; 110; 210; 310; 410) umfassend
eine erste elastische Blase (14; 114; 214c; 314);
eine streifenförmige reibungsarme Gleitfläche (22; 122; 222; 322; 422), die sich entlang der ersten elastischen Blase erstreckt (14; 114; 214c; 314), wobei die Gleitfläche (22; 122; 222; 322) die äußerste Extremität (26) des Rammschutzes (10; 110; 210; 310; 410) in der Aufprallrichtung bildet, um der erste Rammschutzabschnitt zu sein, der sich mit einem stumpfen Objekt (2), das aus der Aufprallrichtung auf den Rammschutz (10; 110; 210; 310; 410) aufprallt, in Eingriff kommt;
und
eine Aufprallabsorptionsfläche mit höherer Reibung (24a-b; 124a-b; 224a-b; 324a-b; 424a-b), die hinter der äußersten Extremität (26) der reibungsarmen Gleitfläche (22; 122; 222; 322; 422) angeordnet ist, um nicht der erste Rammschutzabschnitt zu sein, der mit einem stumpfen Objekt (2), das aus der Aufprallrichtung auf den Rammschutz (10; 110; 210; 310; 410) aufprallt, in Eingriff kommt,
wobei, wenn eine Aufprallkraft eines stumpfen Objekts (2), das aus der Aufprallrichtung auf den Rammschutz (10; 110; 210; 310; 410) auftrifft, eine Grenzkraft überschreitet, die reibungsarme Gleitfläche (22; 122; 222; 322; 422) derart konfiguriert ist, elastisch nachzugeben, so dass das stumpfe Objekt (2) mit der Aufprallabsorptionsfläche mit höherer Reibung (24a-b; 124a-b; 224a-b; 324a-b; 424a-b) in Eingriff kommt, wobei der verwendete Rammschutz (10; 110; 210; 310; 410) auf der im Wesentlichen vertikalen Oberfläche (4) angebracht ist, um vor Stößen durch ein Objekt (2) zu schützen, das sich in der horizontalen Ebene bewegt und auf den Rammschutz (10; 110; 210; 310) aus einer Aufprallrichtung auftrifft, wobei ein schräger Winkel mit der zu schützenden im Wesentlichen vertikalen Oberfläche gebildet wird,
**dadurch gekennzeichnet, dass** die Aufprallabsorptionsfläche mit höherer Reibung durch die Außenfläche (224a-b) aus einer zweiten elastischen Blase (214a-b), die sich entlang der Länge des Rammschutzes (210) erstreckt, gebildet ist.

11. Verwendung eines Rammschutzes nach Anspruch 10 zum Schutz der Wand eines Industriegebäudes oder Labors gegen aufprallende Maschinen oder Fahrzeuge; zum Schutz der Wand eines Parkhauses gegen aufprallende Autos; zum Schutz der Wand eines Selbstbedienungsladens gegen aufprallende Einkaufswagen; zum Schutz der Wand eines Krankenhauses gegen aufprallende Krankenhausbetten; zum Schutz einer Ladeplattform gegen aufprallende Lastwagen; oder zum Schutz einer Pfeilerkonstruktion gegen aufprallende Boote.

12. Verwendung eines Rammschutzes nach einem der Ansprüche 10 bis 11, wobei der Rammschutz (10; 110; 210; 310) ein streifenförmiger Rammschutz nach einem der Ansprüche 1 bis 10 ist, wobei sich die Längsrichtung des Rammschutzes (10; 110; 210; 310) hauptsächlich in der horizontalen Richtung erstreckt.

13. Verfahren zum Schutz einer Oberfläche (4) vor Stößen von einem stumpfen Objekt (2), das auf die Oberfläche (4) von einer Aufprallrichtung auftrifft, das Verfahren umfassend
zuerst, Ineingriffkommen eine streifenförmige reibungsarme Gleitfläche (22; 122; 222; 322; 422) eines Rammschutzes (10; 110; 210; 310; 410) mit dem stumpfen Objekt (2), wobei die streifenförmige reibungsarme Gleitfläche sich entlang einer ersten elastischen Blase (14; 114; 214c; 314) erstreckt; und
danach, wenn die Aufprallkraft des stumpfen Objektes (2) eine Grenzkraft überschreitet, die reibungsarme Gleitfläche (22; 122; 222; 322; 422) elastisch derart Nachgebenlassen, so dass das stumpfe Objekt (2) mit einer Aufprallabsorptionsfläche mit höherer Reibung (24a-b; 124a-b; 224a-b; 324a-b; 424a-b) des Rammschutzes (10; 110; 210; 310; 410) in Eingriff kommt, wobei die Oberfläche (24a-b; 124a-b; 224a-b; 324a-b; 424a-b) hinter der äußersten Extremität (26) der reibungsarmen Gleitfläche (22; 122; 222; 322; 422) angeordnet ist, von der Aufprallrichtung aus gesehen, wenn der Rammschutz (10; 110; 210; 310; 410) unbelastet ist,
**dadurch gekennzeichnet, dass** die Aufprallabsorptionsfläche mit höherer Reibung durch die Außenfläche (224a-b) aus einer zweiten elastischen Blase (214a-b), die sich entlang der Länge des Rammschutzes (210) erstreckt, gebildet ist.

14. Herstellungsverfahren eines streifenförmigen Rammschutzes zur Montage auf einer Oberfläche, die vor Stößen aus einer Aufprallrichtung geschützt werden soll, wobei das Verfahren **dadurch gekennzeichnet ist, dass** es umfasst
Extrudieren eines Gummis mit relativ höherer Reibung, um einen Rammschutzrohling (12; 212) zu bilden, der eine elastischen Blase (14; 214a-c) umfasst, die sich entlang der Länge des Rammschutzrohlings (12; 212) erstreckt;
Extrudieren eines Polymers mit relativ geringer Reibung, um eine Gleitschicht (20; 220) auf der elastischen Blase zu bilden, wobei die Gleitfläche (20; 220) die äußerste Extremität (26) des Rammschutzes (10; 210) in der Aufprallrichtung bildet, um der erste Rammschutzabschnitt zu sein, der mit einem stumpfen Objekt (2), das aus der Aufprallrichtung auf den Rammschutz (10; 210) aufprallt, in Eingriff kommt; und
Unbedecktlassen einer streifenförmige Oberfläche (24a-b; 224a-b) aus Gummi mit relativ höherer Reibung, die sich entlang der Länge des Rammschutzes (10; 110; 210; 310) erstreckt, wobei die streifenförmige Oberfläche (24a-b; 224a-b) aus Gummi mit relativ höherer Reibung hinter der äußersten Extremität (26) der reibungsarmen Gleitschicht (20; 120; 220; 320) angeordnet ist, um nicht der erste Rammschutzabschnitt zu sein, der mit einem stumpfen Objekt (2), das aus der Aufprallrichtung auf den Rammschutz (10; 110; 210; 310) aufprallt, in Eingriff kommt.

## Revendications

1. Dispositif de protection en forme de bande, destiné à être monté sur une surface à protéger contre les chocs depuis une direction d'impact, le dispositif de protection (10 ; 110 ; 210 ; 310) comprenant
une première poche élastique (14 ; 114 ; 214c ; 314) s'étendant le long de la longueur du dispositif de protection (10 ; 110 ; 210 ; 310) ;
une surface de glissement à faible friction en forme de bande (22 ; 122 ; 222 ; 322) s'étendant le long de la première poche élastique (14 ; 114 ; 214c ; 314), la surface de glissement (22 ; 122 ; 222 ; 322) formant l'extrémité la plus extérieure (26) du dispositif de protection (10 ; 110 ; 210 ; 310) dans la direction d'impact, de manière à constituer la première partie du dispositif de protection (10 ; 110 ; 210 ; 310) à s'engager avec n'importe quel objet contendant (2) impactant le dispositif de protection (10 ; 110 ; 210 ; 310) depuis la direction d'impact ; et
une surface d'absorption d'impact à friction plus élevée en forme de bande (24a-b ; 124a-b ; 224a-b ; 324a-b) s'étendant le long de la longueur du dispositif de protection (10 ; 110 ; 210 ; 310), ladite surface d'absorption d'impact à friction plus élevée (24a-b ; 124a-b ; 224a-b ; 324a-b) étant disposée de façon rétractée derrière l'extrémité la plus extérieure (26) de la surface de glissement à faible friction (22 ; 122 ; 222 ; 322), de manière à ne pas constituer la première partie du dispositif de protection à s'engager avec n'importe quel objet contendant (2) impactant le dispositif de protection (10 ; 110 ; 210 ; 310) depuis la direction d'impact,
**caractérisé en ce que** ladite première poche élastique (14 ; 114 ; 214c ; 314) est configurée pour se déformer élastiquement lorsqu'une force d'impact d'un objet contendant (2) frappant la première poche élastique (14 ; 114 ; 214c ; 314) depuis la direction d'impact dépasse une forme limite, de manière à ce que l'objet contendant (2) engage la surface d'absorption d'impact à friction plus élevée (24a-b ; 124a-b ; 224a-b ; 324a-b) du dispositif de protection (10 ; 110 ; 210 ; 310), dans lequel
ladite surface d'absorption d'impact à friction plus élevée est formée par la surface extérieure (224a-b) d'une deuxième poche élastique (214a-b) s'étendant le long de la longueur du dispositif de protection (210).

2. Dispositif de protection en forme de bande selon la revendication 1, comprenant en outre un pied de montage (18 ; 218a-c) permettant de fixer le dispositif de protection (10 ; 210) à une rainure correspondante de la surface (4) à protéger contre les chocs.

3. Dispositif de protection en forme de bande selon l'une quelconque des revendications précédentes, dans lequel ladite surface d'absorption d'impact à friction plus élevée est formée par une partie en forme de bande (24a-b ; 124a-b) de la poche (14 ; 114) adjacente à la surface de glissement à faible friction (22 ; 122).

4. Dispositif de protection en forme de bande selon la revendication 3, dans lequel la surface de glissement à faible friction (22) couvre moins d'environ 40 % d'une surface extérieure totale de la poche (14).

5. Dispositif de protection en forme de bande selon l'une quelconque des revendications précédentes, comprenant en outre une deuxième surface d'absorption d'impact à friction plus élevée en forme de bande (24a-b ; 124a-b ; 224a-b ; 324a-b), dans lequel lesdites surfaces d'absorption d'impact à friction plus élevée (24a-b ; 124a-b ; 224a-b ; 324a-b) s'étendent le long de chaque côté de la surface de glissement à faible friction (22 ; 122 ; 222 ; 322).

6. Dispositif de protection en forme de bande selon l'une quelconque des revendications précédentes, dans lequel la force limite correspond à une charge de ligne appliquée le long d'une ligne perpendiculaire à la direction longitudinale du dispositif de protection, exerçant une force de 40 N/dm à partir d'une direction d'impact normale à la surface (4) à protéger.

7. Dispositif de protection en forme de bande selon l'une quelconque des revendications précédentes, dans lequel ladite surface de glissement à faible friction (22 ; 122 ; 222 ; 322) est formée par une surface de fibres floquées.

8. Dispositif de protection en forme de bande selon l'une quelconque des revendications précédentes, dans lequel ladite surface de glissement à faible friction (22 ; 122 ; 222 ; 322) est constituée de caoutchouc ou de plastique.

9. Dispositif de protection en forme de bande selon l'une quelconque des revendications précédentes, dans lequel ladite surface d'absorption d'impact à friction plus élevée (24a-b ; 124a-b ; 224a-b ; 324a-b) est constituée de caoutchouc.

10. Utilisation d'un dispositif de protection destiné à protéger une surface essentiellement verticale (4) contre les chocs depuis une direction d'impact, le dispositif de protection (10 ; 110 ; 210 ; 310 ; 410) comprenant
une première poche élastique (14 ; 114 ; 214c ; 314) ;
une surface de glissement à faible friction (22 ; 122 ; 222 ; 322 ; 422) s'étendant le long de la première poche élastique (14 ; 114 ; 214c ; 314), la surface de glissement (22 ; 122 ; 222 ; 322) formant l'extrémité la plus extérieure (26) du dispositif de protection (10 ; 110 ; 210 ; 310) dans la direction d'impact, de manière à constituer la première partie du dispositif de protection (10 ; 110 ; 210 ; 310 ; 410) à s'engager avec n'importe quel objet contendant (2) impactant le dispositif de protection (10 ; 110 ; 210 ; 310 ; 410) depuis la direction d'impact ; et
une surface d'absorption d'impact à friction plus élevée (24a-b ; 124a-b ; 224a-b ; 324a-b ; 424a-b) disposée de façon rétractée derrière l'extrémité la plus extérieure (26) de la surface de glissement à faible friction (22 ; 122 ; 222 ; 322 ; 422), de manière à ne pas constituer la première partie du dispositif de protection à s'engager avec n'importe quel objet contendant (2) impactant le dispositif de protection (10 ; 110 ; 210 ; 310 ; 410) depuis la direction d'impact,
la surface de glissement à faible friction (22 ; 122 ; 222 ; 322 ; 422) étant configurée pour se déformer élastiquement lorsqu'une force d'impact d'un objet contendant (2) frappant le dispositif de protection (10 ; 110 ; 210 ; 310 ; 410) depuis la direction d'impact dépasse une forme limite, de manière à ce que l'objet contendant (2) engage la surface d'absorption d'impact à friction plus élevée (24a-b ; 124a-b ; 224a-b ; 324a-b ; 424a-b), le dispositif de protection (10 ; 110 ; 210 ; 310 ; 410) étant, pendant son utilisation, monté sur une surface essentiellement verticale (4) de manière à protéger celle-ci contre les chocs venant d'un objet (2) se déplaçant dans le plan horizontal et frappant le dispositif de protection (10 ; 110 ; 210 ; 310) depuis une direction d'impact formant un angle oblique avec la surface essentiellement verticale à protéger,
**caractérisée en ce que** ladite surface d'absorption d'impact à friction plus élevée est formée par la surface extérieure (224a-b) d'une deuxième poche élastique (214a-b) s'étendant le long de la longueur du dispositif de protection (210).

11. Utilisation d'un dispositif de protection selon la revendication 10, destiné à protéger le mur d'un bâtiment industriel ou d'un laboratoire contre l'impact de machines ou de véhicules ; à protéger le mur d'un garage de stationnement contre l'impact de voitures ; à protéger le mur d'un magasin à libre-service contre l'impact de caddies ; à protéger le mur d'un hôpital contre l'impact de lits d'hôpital ; à protéger une plateforme de chargement contre l'impact de camions ; ou à protéger une construction de jetée contre l'impact de bateaux.

12. Utilisation d'un dispositif de protection selon l'une quelconque des revendications 10 à 11, dans laquelle le dispositif de protection (10 ; 110 ; 210 ; 310) est un dispositif de protection en forme de bande selon l'une quelconque des revendications 1 à 10, la direction longitudinale du dispositif de protection (10 ; 110 ; 210 ; 310) s'étendant principalement dans la direction horizontale.

13. Procédé pour la protection d'une surface (4) contre les chocs venant d'un objet contendant (2) s'approchant de la surface (4) depuis une direction d'impact, le procédé comprenant
une surface de glissement à faible friction en forme de bande (22 ; 122 ; 222 ; 322 ; 422) d'un dispositif de protection (10 ; 110 ; 210 ; 310 ; 410) s'engageant avec l'objet contendant (2) en premier, ladite surface de glissement à faible friction en forme de bande s'étendant le long d'une première poche élastique (14 ; 114 ; 214c ; 314) ; et
ensuite, si la force d'impact de l'objet contendant (2) dépasse une force limite, la surface de glissement (22 ; 122 ; 222 ; 322 ; 422) pouvant se déformer élastiquement, de manière à ce que l'objet contendant (2) s'engage avec une surface d'absorption d'impact à friction plus élevée (24a-b ; 124a-b ; 224a-b ; 324a-b ; 424a-b) du dispositif de protection (10 ; 110 ; 210 ; 310 ; 410), ladite surface (24a-b ; 124a-b ; 224a-b ; 324a-b ; 424a-b) étant disposée de façon rétractée derrière l'extrémité la plus extérieure (26) de la surface de glissement à faible friction (22 ; 122 ; 222 ; 322 ; 422), vue depuis la direction d'impact, lorsque le dispositif de protection (10 ; 110 ; 210 ; 310 ; 410) n'est pas chargé,
**caractérisé en ce que** ladite surface d'absorption d'impact à friction plus élevée est formée par la surface extérieure (224a-b) d'une deuxième poche élastique (214a-b) s'étendant le long de la longueur du dispositif de protection (210).

14. Procédé pour la fabrication d'un dispositif de protection en forme de bande, destiné à être monté sur une surface à protéger contre les chocs depuis une direction d'impact, le procédé étant **caractérisé en ce qu'**il comprend
l'extrusion d'un caoutchouc à friction relativement plus élevée pour former une ébauche de dispositif de protection (12 ; 212) comprenant une poche élastique (14 ; 214a-c) s'étendant le long de la longueur de l'ébauche de dispositif de protection (12 ; 212) ;
l'extrusion d'un polymère à friction relativement plus faible pour former une couche de glissement (20 ; 220) sur la poche élastique, la couche de glissement (20 ; 220) formant l'extrémité la plus extérieure (26) du dispositif de protection (10 ; 210) dans la direction d'impact, de manière à constituer la première partie du dispositif de protection à s'engager avec n'importe quel objet contendant (2) impactant le dispositif de protection (10 ; 210) depuis la direction d'impact ; et
laisser une surface en forme de bande (24a-b ; 224a-b) en caoutchouc à friction relativement plus élevée rester nue, ladite surface en forme de bande (24a-b ; 224a-b) en caoutchouc à friction relativement plus élevée s'étendant le long de la longueur du dispositif de protection (10 ; 110 ; 210 ; 310) et étant rétractée derrière l'extrémité la plus extérieure (26) de la couche de glissement à faible friction (20 ; 120 ; 220 ; 320), de manière à ne pas constituer la première partie du dispositif de protection à s'engager avec n'importe quel objet contendant (2) impactant le dispositif de protection (10 ; 110 ; 210 ; 310) depuis la direction d'impact.
